(19) Europäisches Patentamt
European Patent Office
Office européen des brevets

(11) **EP 0 977 194 A2**

(12) **EUROPÄISCHE PATENTANMELDUNG**

(43) Veröffentlichungstag:
02.02.2000 Patentblatt 2000/05

(51) Int. Cl.$^7$: **G11B 9/00**, G11B 19/20,
G11B 17/34, G11B 21/02,
G11B 21/08, G11B 21/20

(21) Anmeldenummer: 99110080.1

(22) Anmeldetag: 22.05.1999

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **29.07.1998 DE 19834107**

(71) Anmelder:
**International Business Machines Corporation
Armonk, NY 10504 (US)**

(72) Erfinder: **Wagner, Dietmar
70736 Fellbach-Öffingen (DE)**

(74) Vertreter:
**Teufel, Fritz, Dipl.-Phys.
IBM Deutschland Informationssysteme GmbH,
Patentwesen und Urheberrecht
70548 Stuttgart (DE)**

(54) **Atomspeicher**

(57)    Die Erfindung betrifft einen Atomspeicher mit
wahlfreiem Zugriff, der ähnlich dem Prinzip des Magnetplattenspeichers aufgebaut ist und bei die Positionierung zwischen Schreib-/Lesespitzen (3) und dem
Speichermedium (2) auf interferometrische Weise
gemessen und mit piezoelektrischen Stellgliedern geregelt werden.

Durch den Einsatz speziell angepaßter interferometrischer Meßeinrichtungen (8,9,10,12,13) für die
Lage von Speichersektoren (6), für den Drehwinkel und
für die Speicherspuren (4) können Toleranzen und
Abweichungen der Komponenten in Kauf genommen
werden, die gegenüber der geforderten atomaren Meßgenauigkeit relativ groß sind und daher eine kostengünstige Realisierung des Speichersytems erlauben.

FIG. 3A

FIG. 3B

FIG. 2

EP 0 977 194 A2

**Beschreibung**

Die Erfindung betrifft einen Digitalspeicher nach dem Oberbegriff des Anspruchs 1.

An die Kapazität digitaler Speicher werden immer höhere Anforderungen gestellt. Mit den heute verfügbaren magnetischen und laseroptischen Speichermedien können wahlfrei zugreifbare Speicher mit einigen Gigabytes zu wirtschaftlichen Kosten hergestellt werden.

Nach der Erfindung des Rastertunnelmikroskops im Jahr 1982 wurde vorgeschlagen, dieses Prinzip auch für digitale Speicher einzusetzen, bei denen ein Bit durch das Vorhandensein oder das Fehlen eines (oder mehrerer) Atome oder Moleküle auf einer atomaren Oberfläche dargestellt wird (z.B. US-Patente 4,826,732; 4,987,312; 5,307,311).

Würden bei einem derartigen "Atomspeicher" drei Atome mit einem typischen Durchmesser von 0,5 nm zur Speicherung eines Bits verwendet, so beträgt die typische Ausdehnung einer Bitzelle 3 nm. Mit derartigen Speicherdichten sind Speicher im Bereich von Terabytes auf Oberflächen von einigen Quadratzentimetern möglich.

Bei Abtasten einer Speicherspur auf einem derartigen Medium kann die feine Spitze eines Rastertunnelmikroskops höchstens 100 000 Zeichen pro Sekunde lesen oder schreiben, ist also 40 mal langsamer als der Laserabtaststrahl einer CD-ROM-Platte. Zur Erhöhung der effektiven Lese-/Schreibgeschwindigkeit können bis zu einigen Tausend der feinen Abtastspitzen eines Rastertunnelmikroskops zusammengeschaltet und entsprechend viele Speicherspuren gleichzeitig abgetastet werden; dann sind Datenraten im Bereich von Gigabits pro Sekunde denkbar.

Trotz dieser hohen Datenrate erfordert die immense Gesamtkapazität eines Atomspeichers bei seriellem Auslesen immer noch Stunden.

Ein Atomspeicher mit wahlfreiem Zugriff wäre deshalb wünschenswert, bei dem die Schreib-/Lesespitzen schnell zu einer gewünschten Startposition verschoben und die dort gespeicherte Information mit hoher Datenrate auslesen können. Die dazu erforderliche schnelle mechanische Bewegung und die dann notwendige Servosteuerung zur Positionierung der Rastertunnelmikroskop-Spitzen übersteigt jedoch deren maximale Datenrate und würde aufgrund er unvermeidlichen mechanischen Toleranzen zur Beschädigung der Spitzen führen, die bei einer Servosteuerung in engem Abstand zur Speicherfläche gehalten werden müßten.

Um einen Atomspeicher mit einer linearen Ausdehnung von einigen Zentimetern wahlfrei zu adressieren, ist typischerweise eine relative Positioniergenauigkeit von 0,5 nm pro 4 cm erforderlich, liegt also in der Größenordnung $10^{-8}$. Derartige relative Meßgenauigkeiten können heute noch nicht erreicht werden und würden in jedem Fall einen Aufwand erfordern, der für Digitalspeicher wirtschaftlich nicht tragbar ist.

Die vorliegende Erfindung stellt sich daher die Aufgabe, einen Digitalpeicher der eingangs genannten Art anzugeben, der einen schnellen wahlfreien Zugriff zu den Daten erlaubt und zu wirtschaftlichen Kosten hergestellt werden kann.

Diese Aufgabe wird durch die im Anspruch 1 beschriebene Erfindung gelöst.

Die Erfindung schlägt vor, den Atomspeicher mit wahlfreiem Zugriff ähnlich dem Prinzip des Magnetplattenspeichers aufzubauen und die Positionierung zwischen Schreib-/Lesespitzen und dem Speichermedium auf interferometrische Weise zu messen und mit peizoelektrischen Stellgliedern zu regeln.

Durch den Einsatz speziell angepaßter interferometrischer Meßeinrichtungen für die Speichersektoren, für den Drehwinkel und Positionierungsfehler können Toleranzen und Abweichungen der Komponenten in Kauf genommen werden, die gegenüber der geforderten atomaren Meßgenauigkeit relativ groß sind und daher eine kostengünstige Realisierung des Speichersytems erlauben.

Die dazu vorgeschlagenen interferometrischen Meßeinrichtungen können auch auf anderen Anwendungsgebieten eingesetzt werden.

Ausführungsbeispiele der Erfindung werden nun anhand von Zeichnungen näher erläutert. Es zeigen:

Fig. 1          eine schematische Darstellung einer Rastertunnelmikroskop-Aufnahme der Speicherfläche eines Atomspeichers mit einzelnen Bitpositionen,

Fig. 2          die schematische Darstellung der Formatierung der Speicherfläche eines Atomspeichers mit wahlfreiem Zugriff,

Fig. 3A        eine schematische Seitenansicht eines Atomspeichers mit wahlfreiem Zugriff und interferometrischen Positioniereinrichtungen,

Fig. 3B        eine schematische Aufsicht auf den Atomspeicher von Fig. 3A,

Fig. 4          die schematische Darstellung eines Michelson-Interferometers,

Fig. 5A        die schematische Darstellung eines Interferometers zur genauen Positionsbestimmung von Sektormarken,

Fig. 5B        die schematische Darstellung einer mikromechanisch hergestellten Strahlteileranordnung für zwei Photomultiplier,

Fig. 5C    das Ausgangssignal der Differenzschaltung zweier Dioden oder Photomultiplier im Interferometer nach Fig. 5A,

Fig. 6    die schematische Darstellung einer Differenz-Interferometeranordnung zur Messung der Lage von Speicherspuren in X- und Y-Richtung,

Fig. 7    die schematische Darstellung einer Interferometeranordnung zur Messung des Drehwinkels der Speicherscheibe,

Fig. 8    die schematische Darstellung eines Interferometers zur Messung der Höhe der Lese-/Schreibspitzen über der Speicherscheibe,

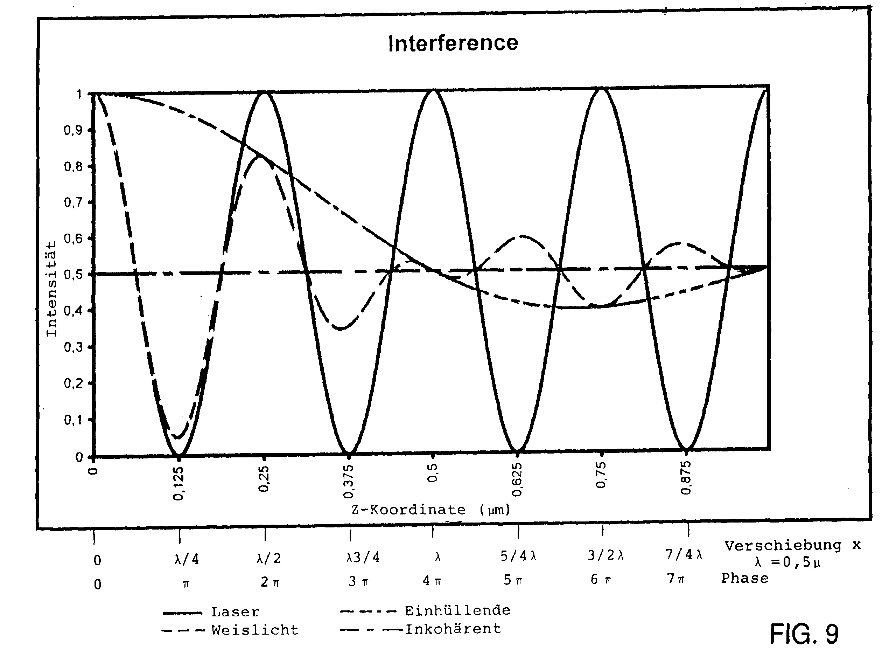

Fig. 9    Die Ausgangsignale interferometrischer Messungen mit weißem und monochromatischem Licht

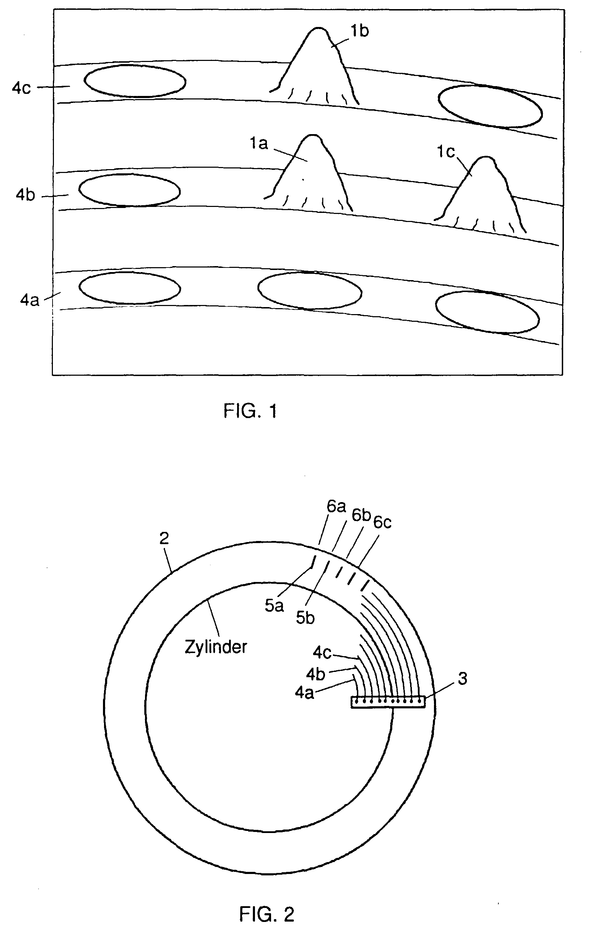

Fig. 1 zeigt eine zeichnische Wiedergabe einer typischen Rastertunnelmikroskop-Aufnahme einer atomaren Oberfläche, z. B. einer Kristallgitterfläche, auf der einzelne Atome oder Moleküle (oder jeweils mehrere derartige Teilchen) 1a, 1b angeordnet sind; die Spitze eines Rastertunnelmikroskops wird mit Hilfe eine piezoelektrischen Elementes längs vorgegebener Spuren 2a, 2b, 2c über diese Oberfläche geführt und erzeugt aufgrund des sehr geringen Abstandes einen Tunnelstrom, der sehr empfindlich vom Abstand der Spitze von der Oberfläche abhängt. Durch Messung dieses Tunnelstroms bei der Abtastung wird die Oberfläche reliefartig dargestellt. Durch Erhöhung der elektrischen Spannung an der Abtastspitze können einzelne Atome oder Moleküle auf dieser Oberfläche abgelegt werden, um ein digitales Bit darzustellen. Bei bestimmten Materialien, wie beispielsweise Wolframdiselenid, können die abgelegten Atome auch wieder entfernt und so der Speicher gelöscht werden.

Die Speicherfläche für ein Bit kann z.B. 3 nm x 3 nm betragen; die Positioniergenauigkeit muß dann im Bereich von 0,5 nm liegen.

Fig. 2 zeigt eine Speicherscheibe 2, die für einen digitalen Atomspeicher nach Art eines herkömmlichen Magnetplattenspeichers vorgesehen ist. Auf der Scheibe 2 ist eine Speicherschicht, beispielsweise aus Wolframdiselenid aufgebracht, in der Daten entlang kreisförmiger Spuren, sog. Zylinder 4a, 4b, 4c gespeichert werden können. Der gegenseitige Abstand der Zylinder soll in der Größenordnung von 3 nm liegen.

Diese Zylinder werden jeweils von einer Lese-/Schreibspitze eines Rastertunnelmikroskops beschrieben und gelesen, wobei eine Vielzahl von derartigen Lese-/Schreibspitzen in einer Schreib-/Lesebank 3 parallel geschaltet sind. Typischerweise können in dem Schreib-/Lesebank 3 tausend oder zehntausend Spitzen angeordnet sein. Derartige Schreib-/Leseköpfe können mit bekannten lithographischen Methoden in der Mikrotechnik hergestellt werden.

Die Speicherplatte 2 kann beispielsweise einen Durchmesser von 40 mm besitzen und von 1000 Rastertunnelmikroskop-Spitzen mit einer Breite von jeweils 10 μm beschrieben werden.Der Schreib-/Lesekopf weist damit eine Länge von ungefähr 1 cm auf und kann insgesamt mit piezoelektrischen Stellgliedern in einem radialen Bereich von ungefähr 10 μm verschoben werden, also über insgesamt 3330 Zylinderspuren 4. Auf diese Weise kann der gesamte effektive Speicherbereich der Speicherplatte 2 abgetastet werden, wenn sich die Platte dreht und die Lese-/Schreibbank 3 piezoelektrisch verschoben wird.

Der Speicherbereich liegt damit in einem Ring auf der Platte zwischen den Radien 1 und 2 cm. Dieser Atomspeicher hat dann eine Kapazität von 8,7 Terrabyte. Die Lese- oder Schreibgeschwindigkeit geträgt ungefähr $10^8$ Bit/sec. Um diese Speicherplatte vollständig zu lesen oder zu beschreiben, sind rund 200 Stunden notwendig. Für eine volle Umdrehung im Lese- oder Schreibmodus werden ungefähr 3,5 Minuten benötigt und somit Größenordnungen mehr als bei Speichern mit wahlfreiem Zugriff, z. B. Magnetplatten mit wahlfreiem Zugriff im Millisekundenbereich.

Um einen Atomspeicher dieser Art trotzdem mit schnellem, wahlfreiem Zugriff auszustatten, schlägt die Erfindung vor, an der Peripherie der Speicherplatte 2 Positioniermarken 5 anzuordnen, die Speichersektoren 6a, 6b, 6c definieren und deren Position interferometrisch mit einer Präzision von ungefähr 0,5 nm bestimmt werden kann. Dazu werden diese Sektormarken 5 als sogenannte λ/2-Marken ausgebildet, die im Zusammenhang mit dem später zu besprechenden interferometrischen Verfahren genauer besprochen werden.

Auf der Speicherplatte des Ausführungsbeispiels mit einem Durchmesser von ungefähr 4 cm werden 5000 Sektormarken angebracht, die bei der schnellen Positionierung der Speicherplatte durch mechanische Drehung interferometrisch ausgewertet werden. Nachdem der gewünschte Sektor durch schnelle Drehung der Speicherplatte erreicht ist, wird die Speicherplatte mechanisch mit einem piezoelektrischen Element verklemmt und die weitere Positionierung innerhalb des Sektors durch piezoelektrische Verschiebung und interferometrische Messung des Drehwinkels innerhalb des Sektors bestimmt. Die relative Genauigkeit dieser zweiten interferometrischen Messung braucht jetzt nur innerhalb des Sektorbereichs betrachtet werden und liegt daher um Größenordnungen niedriger als die gleiche relative Meßgenauigkeit bezogen auf eine volle Drehung der Speicherplatte.

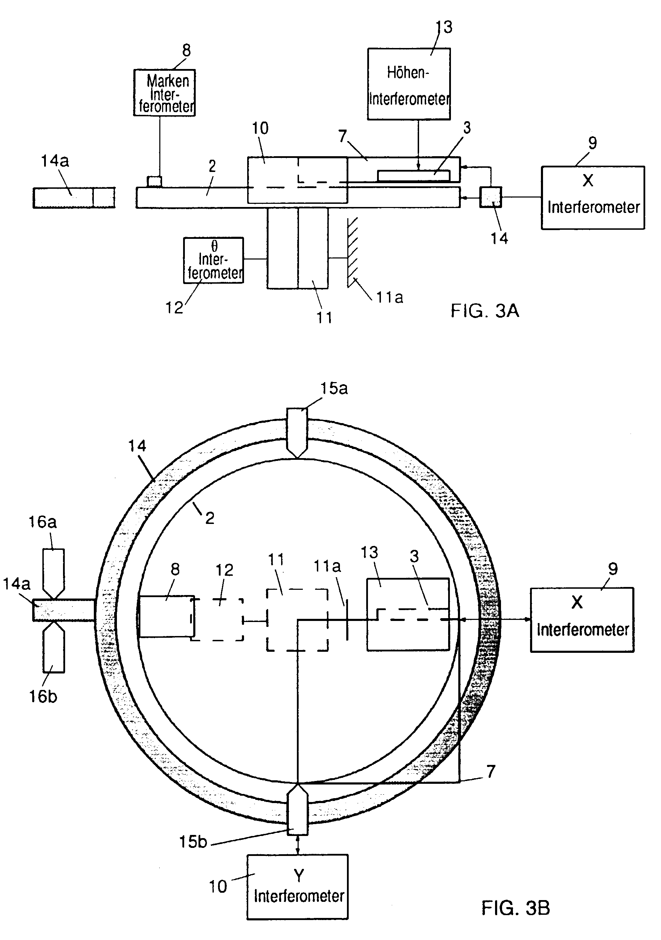

Die Fign. 3A und 3B zeigen in schematischer Weise einen Schnitt bzw. eine Aufsicht auf einen Atomspeicher mit wahlfreiem Zugriff und interferometrischer Positionsbestimmung nach der Erfindung. Die Speicherplatte 2 ist drehbar um eine nicht dargestellte Mittelachse gelagert, die mit einem geeigneten Motor für große Drehbewegungen verbunden ist, z. B. einem Gleichstromschrittmotor. Um die Speicherplatte 2 ist in engem Abstand ein Ring 14 angeordnet, in dem mehrere Feststellelemente 15a, 15b vorgesehen sind, die in kraftschlüssigen Kontakt mit der Speicherplatte 2 gebracht werden können. Der Ring 14 weist einen Hebel 14a auf, der mit zwei piezoelektrischen Verschiebeelementen 16a, 16b verbunden ist, mit denen der Hebel 14a gezielt bewegt und so der Ring 14 gedreht werden kann.

Zur Positionierung eines gewünschten Speichersektors 6 der Speicherplatte 2 unter die Schreib-/Lesebank 3 wird bei gelösten Klemmelementen 15a, 15b die Speicherplatte 2 mit hoher Geschwindigkeit vom Schrittmotor so gedreht, daß der gewünschte Sektor unter der Lese-/Schreibbank 3 liegt. Die genaue Positionierung des Sektorbeginns erfolgt mit Hilfe des Markeninterferometers 8. Nachdem der Sektorbeginn angefahren ist, werden die Klemmelemente 15a, 15b auf die Speicherplatte 2 gedrückt und die Feinpositionierung innerhalb des Sektors durch Betätigen der piezoelektrischen Verschiebeelemente 16a, 16b bewirkt.

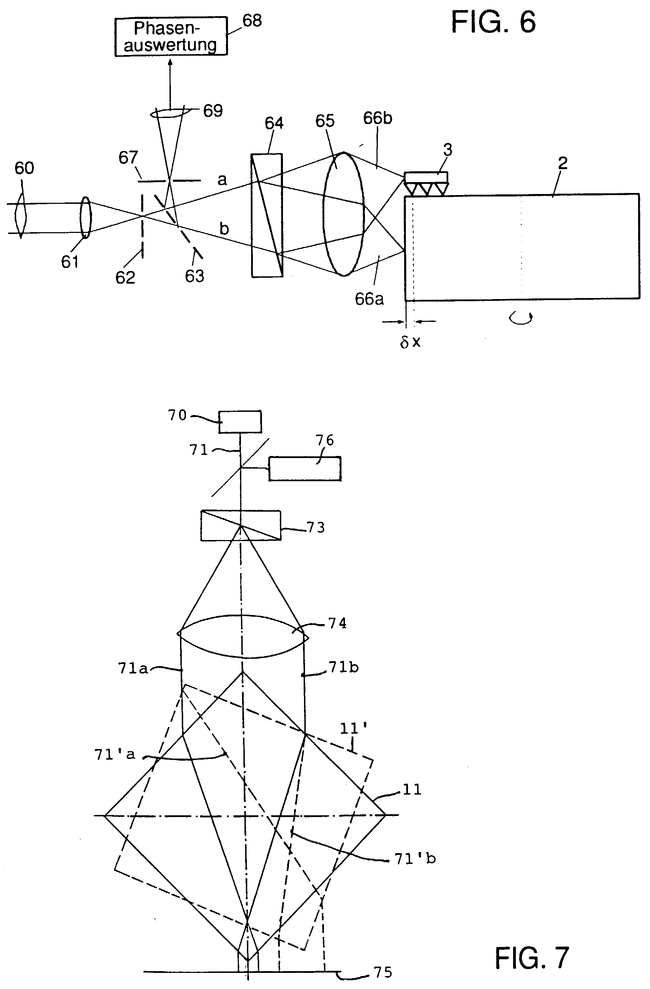

Während der Feinpositionierung mit Hebel 14a wird der Drehwinkel der Speicherplatte 2 mit Hilfe des Thetainterferometers 12 bestimmt, das die Interferenz eines Lichtstrahles an einer mit der Speicherplatte 2 fest verbundenen prismatischen Glassäule 11 auswertet. Einzelheiten dieser Messung werden anhand von Fig. 6 erläutert. Die prismatische Glassäule 11 ist symmetrisch zur Drehachse der Speicherscheibe 2 angeordnet. Um den vollen Drehwinkel von 360° für die Speicherplatte 2 abzudecken, müssen zwei prismatische Glaskörper mit einer gegenseitigen Verdrehung von 45 Grad vorgesehen werden.

Die Feinpositionierung der Lese-/Schreibbank 3 in bezug auf die Spuren 4 der Speicherplatte erfolgt mit einer Relativmessung in bezug auf die Kante der Speicherplatte 2 durch die X- und Y-Interferometer, die senkrecht zueinander angeordnet sind. Die Lese-/Schreibbank 3 ist an einem piezoelektrischen Körper 7 befestigt, der eine Verschiebung sowohl in X- als auch in Y-Richtung bewirken kann. Das X- und das Y-Interferometer tasten jeweils mit einem ihrer Interferenzstrahlen den Rand der Speicherplatte 2 an und mit ihrem zweiten Interferrenzstrahl jeweils die X- bzw. Y-Kante des piezoelektrischen Blockes 7 an. Auf diese Weise wird der Lese-/Schreibblock relativ zu der Speicherplatte 2 gesteuert verschoben, die ihrerseits aus einem außerordentlich stabilen und maßbeständigen Material aufgebaut ist, beispielsweise Zerodur. Durch diese Relativmessung bleibt die Positionierung des Lese-/Schreibblocks 3 unberührt von mechanischen Toleranzen, Ungenauigkeiten, Lagerspiel usw., da die Lage der Datenspuren 4 auf der Speicherplatte 2 nur in bezug auf letztere definiert ist.

Ein besonders kritischer Parameter ist der Abstand der Lese-/Schreibspitzen von der Oberfläche der Speicherplatte 2. Um diesen Abstand optimal einzustellen, nachdem ein Sektor mit schneller Drehbewegung und angehobenem Lese-/Schreibblock angefahren wurde, ist ein Höheninterferometer 13 vorgesehen, das den Abstand jeder Lese-/Schreibspitze von der Speicherplatte 2 überwacht.

Die verschiedenen interferometrischen Anordnungen zur genauen Messung des Sektorbeginns, des Drehwinkels, der Relativposition zwischen Lese-/Schreibbank und Speicherplatte und des Abstands zwischen Lese-/Schreibspitzen und Oberfläche der Speicherplatte werden nun anhand der detaillierten Strahlengänge genauer beschrieben. Alle diese interferometrischen Anordnungen beruhen auf dem Prinzip des Michelson-Interferometers, das entsprechend der jeweiligen Meßaufgabe für die Erfindung abgewandelt wurde.

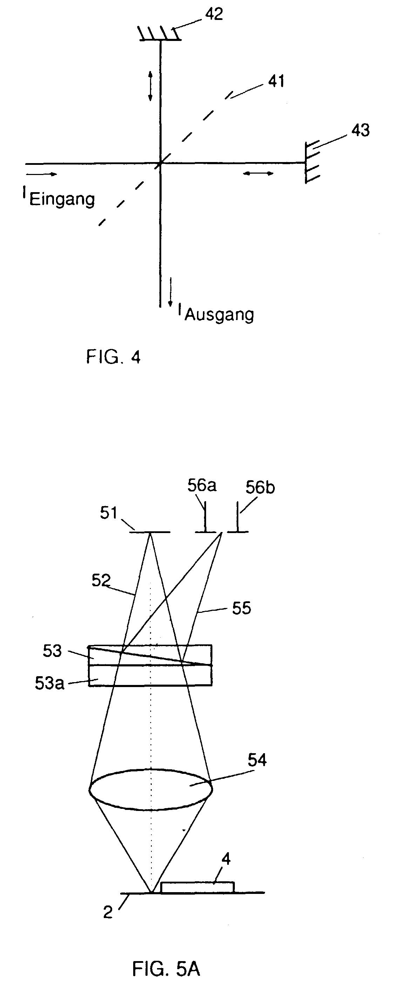

Fig. 4 zeigt das Prinzip eines Michelson-Interferometers, bei dem ein Eingangslichtbündel I von einem halbdurchlässigen Spiegel 41 in zwei Teillichtbündel aufgespalten wird. Diese Teillichtbündel werden jeweils an einem Spiegel 42 bzw. einem Meßobjekt 43 reflektiert und die reflektierten Bündel zu einem Ausgangsbündel zusammengefaßt, in dem Interferenzmuster entsprechend dem Phasenunterschied der beiden Teillichtbündel auftreten. Die Phasenverschiebung $\phi$ der Teillichtbündel kann mit verschieden bekannten Methoden gemessen werden, beispielsweise indem drei verschiedene Phasen mit bekannten Werten zusätzlich aufgeprägt werden. Aus der gemessenen Phasenverschiebung läßt sich dann die Verschiebung X des Meßobjekts 43 berechnen zu : $X = \lambda\phi/(4\pi)$. Derartige Verfahren sind z.B. aus EP-A-11708 oder EP-A-561 015 bekannt.

Für die Messung der Phasenverschiebung mit Photodioden oder Photomultipliern ist ein Mindestwert für das Signal/Rauschverhältnis notwendig. Unter Berücksichtigung der verschiedenen Rauschquellen (elektrisches Rauschen bei Photodioden, Photonenrauschen bei Multipliern) und dem hier erforderlichen Genauigkeitsgrad der Positionierung lassen sich die erforderlichen Intensitäten abschätzen. Die Ausgangsintensitäten können mit Fotodioden oder Multiplier in einen elektrischen Strom überführt werden und damit können sie gemessen werden. Die Präzision der Messung wird vom Signal zu Rauschverhältnis, S/N bestimmt. Um mit einer Längenmessung in einem Interferometer eine Präzision von $2\delta = 0,5$ nm oder ein Inkrement von 0,25 nm zu erreichen, benötigt man:

$$S/N = \lambda/(4\pi\Delta x) \qquad \Delta x = \text{Inkrement}$$

Für rotes Licht mit einer Wellenlänge von 0,67 $\mu$m ist ein S/N von 200 notwendig.

Die Rauschquellen sind für Photodioden und Multiplier unterschiedlich. Das Rauschen der Photodioden ist im wesentlichen elektrisches Rauschen. Die wesentliche Rauschquelle bei Multipliern dagegen ist das Photonenrauschen.

Die zur Erzeugung des berechneten S/N erforderliche Intensität $I_{MIN}$ wird für Photodioden wie folgt berechnet:

$$I_{MIN} = S/N \; NEP(f)^{1/2}$$

NEP= Noise Equivalent Power
= $5 \; 10^{-13}$ W Hz$^{1/2}$

f = Bandwidth = 1 MHz

Für ein S/N = 200 und eine Bandbreite von 1 MHz wird $I_{MIN}$= $1 \; 10^{7}$ W.

Für Multiplier wird die, zur Erzeugung eines benötigten S/N, notwendige Intensität:

$$I_{MIN} = (S/N)^2 hc/(\lambda \Delta t \eta)$$

mit h = Plancksches Wirkungsquantum $6{,}6 \; 10^{-34}$Wsec$^2$
c = Lichtgeschwindigkeit = $3 \; 10^8$m/sec
$\Delta t$ = Zeitintervall
$\eta$ = Quantenwirkungsgrad

Für rotes Licht mit $\lambda$ = 0,67 $\mu$m, einem Quantenwirkungsgrad $\eta$ = 0,4, einem S/N = 200 und einer Belichtungszeit $\Delta t$ = 1 $\mu$sec folgt für $I_{MIN}$ = $3 \; 10^{-8}$ W für einen Mulitplier.

Selbst wenn in einem Atomspeicher einige tausend Lese-/Schreibspitzen interferometrisch überwacht werden, beträgt die erforderliche Leistung nur Bruchteile von Milliwatt. Die hier vorgeschlagenen interferometrischen Meßmethoden dürften daher für einen Atomspeicher keine Schwierigkeiten oder thermische Probleme bieten.

Fig. 5A stellt den schematischen Aufbau einer interferometrischen Anordnung zur präzisen Positionsbestimmung der Sektormarken dar. Durch Verwendung einer sog. Phasenplatte (siehe z. B. Flügge, Handbuch der Physik, 1956, S. 583 ff.) und der Auswertung des Differenzenquotienten zweier Dioden oder Photomultipliern, die vom Signalstrahl beaufschlagt werden, lassen sich Positioniergenauigkeiten von Bruchteilen eines Nanometers oder Winkelempfindlichkeiten von ungefähr $10^{-8}$ rad erzeugen.

In Fig. 5A wird mit einer Abbildungsoptik 54 die lichtemittierende Schicht eines Diodenlasers 51 auf die Oberfläche der Speicherplatte 2 abgebildet. Die Sektorpositionierungsmarke 4 auf der Speicherplatte 2 ist als sog. 180 Grad oder $\lambda/2$ Phasenplatte mit einer optischen Dicke von $\lambda/4$ ausgebildet (da sie zweimal vom Licht durchlaufen wird), wobei $\lambda$ die Wellenlänge des von der Laserdiode 51 emittierten Lichtes darstellt. Das Lichtbündel 52 der Diode 51 durchläuft dabei ein Rochonprisma 53 mit einer nachgeschalteten $\lambda/4$-Platte 53a. Das Lichtbündel 52 wird beim Durchgang durch das Rochonprisma polarisiert, damit das reflektierte Lichtbündel 55, das zweimal durch die $\lambda/4$-Platte 53a hindurchgetreten ist und somit seine Polarisationsrichtung um 90° gedreht hat, auf zwei nebeneinander angeordnete Photodioden 56a, 56b abgelenkt wird. Die Photodioden 56a, 56b, die auch als sog. Quadrantdiode ausgebildet sein können, erzeugen den Differenzenquotienten (a-b)/(a+b) aus den beiden Teilinsitäten des Lichtes A und B im Strahlenbündel 55.

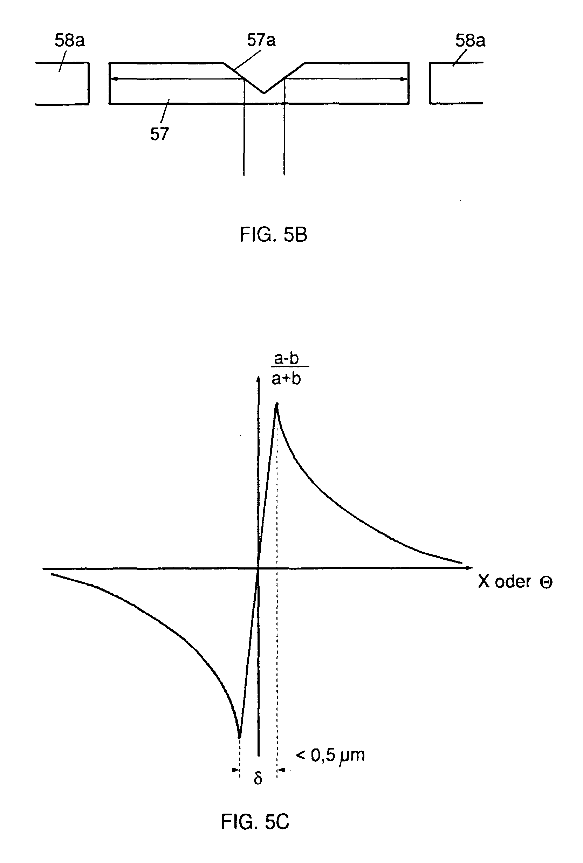

Fig. 5B zeigt eine alternative Anordnung, bei der anstelle der beiden Photodioden 56a, 56b zwei Photomultiplier 58a, 58b verwendet werden, auf die das Licht des Lichtbündels 55 mit Hilfe eine Strahlteilereinrichtung 57 aufgeteilt werden, die aus einer Glasplatte mit einem mikromechanisch hergestellten Prisma 57a besteht. Der Vorteil der Verwendung von Multiplayern 58a, 58b besteht darin, daß die ein geringes Photonenrauschen aufweisen.

Fig. 5C zeigt das Ausgangssignal der Photodioden 56a, 56b, bzw. der Photomultiplier 58a, 58b. Das Signal (a-b)/(a+b) ist dort über der Wegverschiebung X bzw. der Winkelverschiebung $\theta$ aufgetragen.

Durch die Ausgestaltung der Sektormarke 4 als Phasenplatte, die beim Durchgang des einfallenden und dann reflektierten Lichtes eine Phasenverschiebung von insgesamt 180° erzeugt, stellt das Ausgangssignal nach Fig. 5C einen scharfen Nulldurchgang mit einer Breite von weniger als 0,5 $\mu$m dar. Diese Signalform ist auf den Einsatz der als 180° Phasenplatte ausgebildeten Sektormarke zurückzuführen.

Der lineare Kurventeil im Bereich $\delta$ von Fig. 5C wird dann erfindugsgemäß mit an sich bekannten Methoden interpoliert, beispielsweise in 4096 Schritte, so daß die für den Atomspeicher erforderliche Genauigkeit erreicht wird (0,5 um/4096 = 0,1nm). Voraussetzung für diese Interpolation ist ein ausreichendes Signal/Rausch-Verhältnis, das mit der vorliegenden Erfindung erreicht wird.

Dieses empfindliche Positionierverfahren und die Einrichtungen nach Fig. 5 können natürlich auch in anderen Anwendungsgebieten Verwendung finden.

Fig. 6 zeigt den Aufbau einer Differenzinterferometer-Anordnung, die in den X- und Y-Interferometern von Fig. 3 Verwendung finden können, um den relativen Abstand zwischen der Speicherplatte 2 und den Lese-/Schreibblock 3 mit einer Präzision im Subnanometerbereich zu bestimmen.

Das Lichtbündel 60 eines Lasers tritt dazu durch eine Linse 61 und einen Strahlteiler 63 in ein Wollaston-Prisma 64 ein, wo es in zwei polarisierte Teilbündel 66a, 66b aufgespalten wird, die von einer Linse 65 auf den Rand der Speicherplatte 2 bzw. auf den Lese-/Schreibblock 3 oder den Rand der peizoelektrischen Platte 7 fokusiert werden. Die reflektierten Lichtbündel 66a, 66b werden dann vom Strahlteiler 63 zu einer Phasenauswerteeinrichtung 68 abgelenkt, in der auf herkömmliche Weise der Phasenunterschied der beiden Lichtbündel 66a, 66b ausgewertet wird, der durch eine Relativverschiebung δX zwischen den Lese-/Schreibblock 3 und der Speicherplatte 2 entsteht.

Diese Positionsdifferenz δX wird beim Betrieb des Atomspeichers mit einem Regelkreis konstant gehalten. Damit wird der Lese-/Schreibblock 3 bei einer Radialverschiebung der Speicherplatte 2 auf Spuren geführt, die bis auf 0,5 nm sämtliche Abweichungen des Randes der Speicherplatte 2 vom Idealkreis zeigen. Mit dieser interferometrischen Regelanordnung können daher die Speicherspuren 4 (Zylinder) des Atomspeichers auch bei vorhandenen radialen Abweichungen reproduzierbar nachgefahren werden.

Damit reproduzierbar ein bestimmter unter den Zylindern 4 des Atomspeichers angefahren werden kann, benötigt das Differenzinterferometer nach Fig. 6 einen absoluten Nullpunkt. Dieser Nullpunkt wird mit Hilfe zweier konfokaler Blenden 62, 67 erzeugt, die bewirken, daß die Intensität im Lichtbündel 69, das der Phasenauswerteeinheit zugeführt wird ein Maximum erreicht, wenn exakt fokussiert ist.

Der Nullpunkt für die Messung wird nun in bezug auf dieses Maximum bei exakter Fokussierung definiert. Dazu wird das Meßsignal bei mittlerer Stellung des Lese-/Schreibblocks 3 durch Drehung der Speicherplatte (mit den dabei unvermeidlichen radialen Abweichungen) auf genaues Maximum fokussiert. Die Speicherplatte 2 wird dann in dieser Position festgehalten und die Spitzen gemeinsam in X-Richtung um +/-5 μm verschoben. Bei dieser Verschiebung wird das Interferometer-Ausgangssignal über der X-Achse aufgetragen und das Maximum der einhüllenden Kurve durch Differenzieren bestimmt. Dieses Maximum wird als absoluter Nullpunkt für die Bewegungen in X-Richtung verwendet.

Die Empfindlichkeit dieser Meßmethode wird durch den mehr oder weniger schnellen Abfall der Intensität bei Defokusierung bestimmt. Dieser Intensitätsabfall läßt sich Wahl der numerischen Apertur der Linse 65 einstellen. Durch lineare Interpolation können dann in dem Meßsignal die entsprechenden Positioniergenauigkeiten erreicht werden.

In der Phasenauswerteeinrichtung werden entsprechend der IBM Technical Disclosure Veröffentlichung Vol. 38, Nr. 5, Mai 1995, S. 101, "Highly Accurate and Rapid Incremental Interferometric Measurement of Rotary Motion" vier Signale mit 90° Phasenunterschied erzeugt. Die Summe dieser vier Signale ist zu jedem Zeitpunkt proportional zum gesamten, von der Blende durchgelassenen Licht, so daß hier ein Signal für den absoluten Nullpunkt vorliegt.

Um den Lese-/Schreibblock 3 bei beliebigen Spurfehlern und Lageänderungen nachführen zu können, muß außer der X-Komponente auch eine Kompensation in Y-Richtung erfolgen. Die Komponente in X-Richtung wird, wie beschrieben, durch Regelung eines konstanten Abstandes zwischen dem Schreib-/Leseblock 3 und dem Speicherplattenrand nachgeführt.

Eine entsprechende interferometische Anordnung 10 ist auch für die Y-Richtung vorgesehen und in gleicher Weise wie Fig. 6 aufgebaut. Allerdings muß zur Regelung der Y-Komponente neben der Differenz zwischen dem Schreib-/Leseblock 3 und dem Rand der Speicherplatte 2 auch die absolute Lage des Plattenrandes bestimmt werden, um beispielsweise eine Verschiebung der gesamten Speicherplatte in Y-Richtung kompensieren zu können. Um diese beiden Parameter zu ermitteln, wird das Interferometer 10 mit zwei verschiedenen Wellenlängen betrieben, wobei die erste Wellenlänge λ1 in gleicher Weise wie in X-Richtung die Differenz zwischen dem Schreib-/Leseblock 3 und dem Rand der Speicherplatte 2 ermittelt. Für die zweite Wellenlänge λ2 wird zwischen Linse 65 und Schreib-/Leseblock 3 ein dichroitischer Strahlteiler eingeführt, der fest mit der Grundplatte des Atomspeichers verbunden und nur Licht der zweiten Wellenlänge λ2 reflektiert. Die mit Hilfe der zweiten Wellenlänge λ2 interferometrisch ermittelte absolute Lage des Randes der Speicherplatte 2 wird benutzt, um entsprechende Korrekturen bei der Zählung der Sektoren anzubringen.

In einer vorteilhaften Ausgestaltung der Interferometer-Anordnung nach Fig. 6 kann anstelle eines Laserlichtbündels 60 und der Hilfslinse 61 ein Diodenlaser verwendet werden, der am Ort der Blende 62 angeordnet ist. Das Loch in der Blende 67 ist dann auf die lichtemittierende Fläche des Diodenlasers abzustimmen.

Fig. 7 zeigt eine Interferometer-Anordnung zur Messung des Drehwinkels innerhalb eines Sektors. Das quadratische Glasprisma 11 liegt symmetrisch zur Drehachse der Speicherplatte 2 und ist fest mit dieser verbunden. Das Lichtbündel 71 eines Lasers 70 durchläuft einen halbdurchlässigen Spiegel 72 und ein Wollastonprisma 73 und wird durch ein Abbildungssystem 74 durch das Glasprisma 11 auf einen Spiegel 75 abgebildet. Das reflektierte Licht wird infolge der Polarisation im Wollastonprisma 73 durch den halbdurchlässigen Spiegel 72 zu einer Phasenmeßeinrichtung 76 abgelenkt.

Der Lichtweg zweier Strahlen 71a, 71b des Laserlichtbündels ist schematisch bei zwei verschiedenen Winkelstellungen des quadratischen Glasprismas 11 und 11' dargestellt. Der Weglängenunterschied der beiden Lichtstrahlen kann bei einem quadratischen Glasprisma mit einer Kantenlänge von 10 mm bis zu 30 mm betragen. Der dadurch hervorgerufene Phasenunterschied wird in der Einrichtung zur Phasenmessung 76 bestimmt und erlaubt es, den entsprechenden Drehwinkel zu bestimmen. Um den vollständigen Drehbereich von 360° abzudecken, sind zwei quadratische Glasprismen erforderlich, die um 45° zueinander verdreht sind.

Als Laser 70 kann ein relativ kleiner und billiger Diodenlaser eingesetzt werden, da bei der Messung innerhalb eines Speichersektors keine hohen Anforderungen an die relative Meßunsicherheit gestellt werden.

Diese Meßunsicherheit läßt sich folgendermaßen abschätzen: Die Wiederholbarkeit für die Messung der Drehbewegung wird durch einen Winkel δ bestimmt, der aus dem Quotienten der lateralen Wiederholbarkeit (0,5 nm) und dem inneren Speicherplattenradius (10 mm) berechnet wird. Der Winkelmeßbereich für einen Speichersektor beträgt ungefähr $1,25 \times 10^{-3}$ rad, so daß sich eine relative Meßunsicherheit von $4 \times 10^{-5}$ ergibt, die technisch ohne weiteres beherrschbar ist. Würde stattdessen die gesamte Speicherplatte mit einer vollen Umdrehung zugrundegelegt, so müßte eine relative Meßunsicherheit von $5 \times 10^{-8}$ rad erreicht werden, was nicht oder nur mit sehr hohem technischen Aufwand möglich wäre.

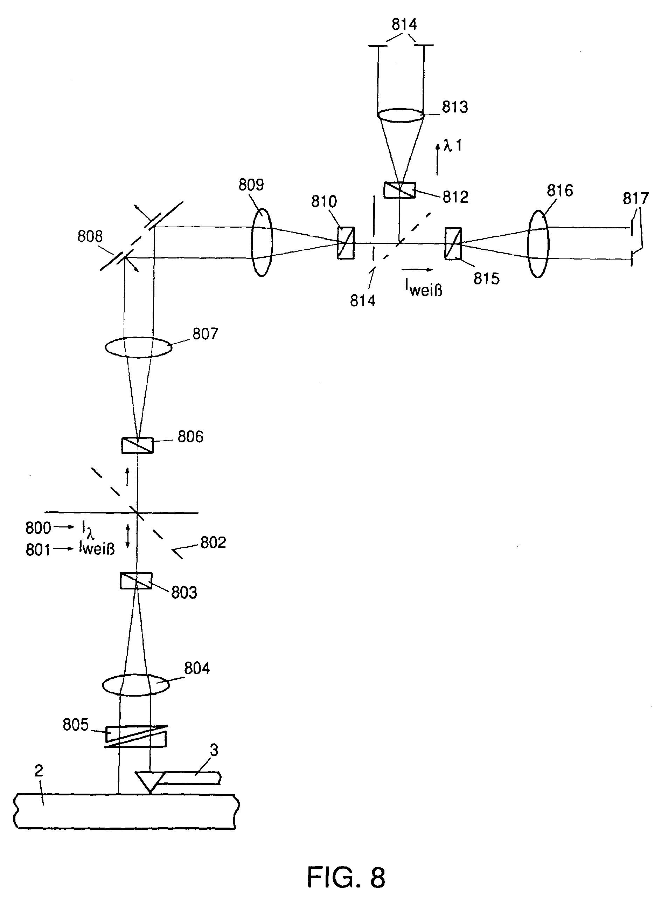

Fig. 8 zeigt eine interferometrische Anordnung zur Messung und Regelung des Abstands der Spitzen im Schreib-/Lesekopf 3 von der Speicherplatte 2. Da die Spitzen der Rasterelektronenmikroskope im Schreib-/Lesekopf 3 sehr empfindlich sind, dürfen sie weder bei Schreib-/Lesevorgängen noch bei der schnellen Drehung der Speicherplatte mit dieser in Berührung kommen. Dazu werden sie während dieses Drehvorgangs selbst angehoben und nach Erreichen des gewünschten Speichersektors wieder abgesenkt. Eine schnelle und präzise Messung des Abstandes ist mit der Einrichtung nach Fig. 8 möglich.

Das Interferometer in Fig. 8 verwendet zwei Lichtquellen, eine Weißlichtquelle und eine (monochromatische) Laserlichtquelle. Das Weißlicht wird eingesetzt, um den Abstand der Spitzen von der Speicheroberfläche grob einzustellen, um anschließend mit dem Laserlicht die Feinpositionierung mit höherer Genauigkeit und höherem Signal-/Rauschverhältnis durchführen zu können. Der Vorteil des Laserlichtes besteht darin, daß ein eindeutiger (richtungsabhängiger) Nullpunkt der interferometrischen Messung ermittelt werden kann. Dazu zeigt Fig. 8B typische Interferenzsignale für monochromatisches Laserlicht und Weißlicht mit seinem typischen, eindeutigen Intensitätsmaximum.

Nach Fig. 8 werden die beiden Lichtbündel 800 ($I_{\lambda 1}$) und 801 ($I_2$) durch einen halbdurchlässigen Spiegel 802 abgelenkt und in einem Wollastonprisma 803 in zwei Teilbündel aufgespalten, die über eine Abbildungsoptik 804 und einen Babinet-Kompensator 805 die Oberfläche der Speicherplatte 2 bzw. das Schreib-/Lesekopf 3 beaufschlagen.

Die an der Speicherplatte bzw. dem Schreib-/Lesekopf 3 reflektierten Lichtbündel treten durch den halbdurchlässigen Strahlteiler 802 hindurch und werden in einem weiteren Wollastonprisma 806 aufgespalten, um über eine Abbildungsoptik 807 auf einen räumlichen Lichtmodulator 808 aufzutreffen. Dieser räumliche Lichtmodulator erlaubt es, auf elektronischem Wege die Phase des Lichtes zu ändern, das von jeder einzelnen Spitze im Schreib-/Lesekopf 3 reflektiert wird. Derartige räumliche Lichtmodulatoren (spatial light modulators) sind im Stand der Technik bekannt. Der räumliche Lichtmodulator 808 hat entsprechend der beiden auftretenden Lichtbündel doppelt so viele Modulationspunkte wie Spitzen im Schreib-/Lesekopf 3 enthalten sind.

Die am räumlichen Lichtmodulator 808 reflektierten Lichtbündel treten durch eine Abbildungsoptik 809 in ein Wollastonprisma 810, wo sie wieder vereinigt werden, und gelangen zu einem dichroitischen Spiegel 811, an dem das monochromatische Licht $I_{\lambda 1}$ zu einer Abbildungsoptik 813 und zwei Anordnungen 814a, 814b von Photodioden abgelenkt wird. Das weiße Lichtbündel $I_{weiß}$ tritt durch den dichroitischen Spiegel 811 hindurch und gelangt zu einem Wollastonprisma 815, wo es aufgespalten wird und durch eine Abbildungsoptik 816 zu einer Photodiodenanordnung 817 gelangt, in der für jede Spitze im Schreib-/Lesekopf 3 jeweils zwei Photodioden vorgesehen sind.

Die Lichtquellen für die Lichtbündel 800 und 801 und/oder die Abbildungsoptik 804 (z.B. mit Zylinderlinsen) sind vorzugsweise so ausgebildet, daß sie ein Lichtband erzeugen, das alle Spitzen im Schreib-/Lesekopf 3 parallel beaufschlagt. Die Abbildung in der gesamten interferometischen Anordnung nach Fig. 8 ist so gewählt, daß jeweils zwei Photodioden in den Photodiodenanordnungen 814 und 817 das an einer Spitze im Schreib-/Lesekopf 3 reflektierte Licht empfangen und auswerten. Der Lichtweg in der gesamten interferomentrischen Anordnung ist so gewählt, daß die Schreib-/Lesespitzen, die entsprechenden Punkte des räumlichen optischen Modulators und die Paare von Photodioden jeweils optisch zueinander konjugiert sind.

Die Paare von Photodioden erzeugen ein Ausgangssignal mit Hilfe eines normierten Differenzsignales. Dazu werden zwei um 180° phasenverschobene Signale benötigt, die von den Wollastonprismen 812 und 815 erzeugt werden, und von den Photodioden entsprechend der Beziehung

$D = I_1-I_2/(I_1+I_2)$ erzeugt werden. Das normierte Differenzsignal ist unabhängig von der Beleuchtungsstärke und läßt sich in Echtzeit bestimmen. Damit steht die notwendige Geschwindigkeit zur Verfügung, um bei Bewegungen in Z-Richtung eine Zerstörung der Spitzen im Schreib-/Lesekopf 3 zu verhindern.

Ist in der Anordnung nach Fig. 8 mit Hilfe des weißen Lichtes der absolute Nullpunkt der Interferenzanordnung bestimmt, so werden mit Hilfe des Laserinterferometers der Wellenlänge $I_{\lambda 1}$ die Spitzen bis auf 1 nm an die Speicherplatte 2 herangeführt. Von diesem Punkt an übernimmt das Rastertunnelmikroskop selbst die Abstandskontrolle und fährt die Spitzen in den optimalen Arbeitspunkt.

Da die Höhe der Spitzen bei der Fertigung des Schreib-/Lesekopfes 3 mit ungefähr 1000 Spitzen nicht homogen ist, dient der Babinet-Kompensator 805 zum groben Abgleich für alle Spitzen und der räumliche Lichtmodulator 808 für den individuellen Feinabgleich jeder einzelnen Spitze. Damit läßt sich jede Spitze so einstellen, daß der optimale Arbeitsabstand bei größter Steilheit des Laserinterferometers mit der Wellenlänge $l_{\lambda 1}$ erreicht wird.

**Patentansprüche**

1. Digitalspeicher mit mindestens einer Speicherfläche, auf der die digitale Information durch die Anwesenheit bzw. die Abwesenheit atomarer oder molekularer Strukturen dargestellt ist, und mit einem Schreib-/Lesekopf (3), in dem ein oder mehrere mikromechanische Spitzen zur Abtastung der Speicherfläche vorgesehen sind, dadurch gekennzeichnet,

   daß die Positionierung und Führung des Schreib-/Lesekopfes auf der Speicherfläche (2) mit interferometrischen Methoden erfolgt.

2. Digitalspeicher nach Anspruch 1, dadurch gekennzeichnet,

   daß die Speicherfläche als rotierende Scheibe (2) ausgebildet ist, auf der die digitale Information längs konzentrischer Spuren (4) aufgezeichnet wird, und daß die Spuren in Sektoren (6) unterteilt sind, deren Beginn durch Marken (5) angezeigt wird, die bei einer schnellen Drehung der Speicherfläche (2) durch eine interferometrische Vorrichtung (8) abgetastet werden.

3. Digitalspeicher nach Anspruch 1 oder 2, dadurch gekennzeichnet,

   daß die Sektormarken als λ/4 Plättchen ausgebildet sind und von einer Interferometeranordnung erkannt werden, bei der eine Lichtquelle (51) auf die Speicherfläche (2) abgebildet wird, und das an der Speicherfläche (2) reflektierte Licht in einer optischen Differenzanordnung (56a, 56b) ausgewertet wird.

4. Digitalspeicher nach Anspruch 3, dadurch gekennzeichnet,

   daß der lineare Teil des Ausgangssignals der optischen Differenzanordung durch elektronische Mittel interpoliert wird.

5. Digitalspeicher nach einem der Ansprüche 1 bis 4, dadurch gekennzeichnet,

   daß zur Drehung der Speicherplatte innerhalb eines Sektors (6) eine piezoelektrische Einrichtung (14, 15, 16) vorgesehen ist, die kraftschlüssig mit der Speicherplatte (2) in Eingriff gebracht wird, nachdem die Speicherplatte auf den Beginn eines Sektors justiert ist.

6. Digitalspeicher nach Anspruch 5, dadurch gekennzeichnet,

   daß die Positioniereinrichtung aus einem Ring (14) mit Feststellelementen (15) besteht, und daß piezoelektrische Verstellelemente (16) auf einen mit dem Ring (14) verbundenen Hebel (14a) einwirken.

7. Digitalspeicher nach einem der Ansprüche 1 bis 6, dadurch gekennzeichnet,

   daß zur Messung der Drehung der Speicherplatte (2) ein Interferometer (12) vorgesehen ist, das die Phasendifferenz zweier Lichtbündel mißt, die durch ein mit der Speicherplatte (2) fest verbundenes quadratisches Glasprisma (11) hindurchtreten und an einem Spiegel (11a) reflektiert werden.

8. Digitalspeicher nach einem der Ansprüche 1 bis 7, dadurch gekennzeichnet,

   daß zur Regelung des Schreib-/Lesekopfes (3) relativ zur Lage der Spuren (4) ein Interferometer (9) vorgesehen ist, das die Relativposition des Schreib-/Lesekopfes (3) relativ zum Rand der Speicherplatte (2) bestimmt.

9. Digitalspeicher nach Anspruch 8, dadurch gekennzeichnet,

   daß das X-Interferometer je eine punktförmige Eintrittsblende (62) und eine Ausgangsblende (67) aufweist, die optisch zueinander konjugiert sind, wodurch das Interferenzsignal bei der Null-Lage zwischen Schreib-/Lesekopf und Speicherplatte (2) einen maximalen Wert aufweist.

10. Digitalspeicher nach einem der Ansprüche 1 bis 9, dadurch gekennzeichnet,

    daß zur Bestimmung der Abstände zwischen den Schreib-/Leseelementen (3) und der Oberfläche der Speicherplatte (2) ein Höheninterferometer (13) vorgesehen ist, in dem eine Doppelzeilenschaltung von Photodioden enthalten ist, die im optischen Strahlengang jeweils einer Spitze des Schreib-/Lesekopfes (3) zugeordnet sind, und den Abstand jeder einzelnen Spitze von der Oberfläche der Speicherplatte (2) nach einem interferometrischen Differenzverfahren bestimmen.

11. Digitalspeicher nach Anspruch 10, dadurch gekennzeichnet,

daß das Höheninterferometer mit zwei verschiedenen optischen Wellenlängenbereichen betrieben wird, und

daß für jeden Wellenlängenbereich eine Auswertevorrichtung (814; 817) für das Interferenzlicht vorgesehen ist.

12. Digitalspeicher nach einem der Ansprüche 10 und 11,
dadurch gekennzeichnet,

daß einer der optischen Wellenlängenbereiche Weißlicht darstellt und zur richtungsabhängigen Grobpositionierung der Spitzen relativ zur Oberfläche der Speicherfläche (2) eingesetzt wird.

13. Digitalspeicher nach einem der Ansprüche 11 oder 12,
dadurch gekennzeichnet,

daß einer der optischen Wellenlängenbereiche monochromatisches Laserlicht darstellt und zur Feinpositionierung des Abstands der Spitzen im Schreib-/Lesekopf (3) bezüglich der Oberfläche der Speicherplatte (2) verwendet wird.

14. Digitalspeicher nach einem der Ansprüche 1 bis 13,
dadurch gekennzeichnet,

daß ein Y-Interferometer (10) zur Kompensation von geometrischen Verschiebungen der Speicherplatte (2) vorgesehen ist und den Abstand zwischen dem Schreib-/Lesekopf (3) und der Grundplatte des Digitalspeichers bestimmt.

15. Digitalspeicher nach einem der Ansprüche 1 bis 14,
dadurch gekennzeichnet,

daß die Speicherplatte (2) aus einem formbeständigen keramischen Material besteht.

FIG. 1

FIG. 2

FIG. 3A

FIG. 3B

FIG. 4

FIG. 5A

58a    57a    58a

57

FIG. 5B

$$\frac{a-b}{a+b}$$

X oder $\Theta$

< 0,5 µm

$\delta$

FIG. 5C

FIG. 6

Phasen-auswertung    68

FIG. 7

FIG. 8

FIG. 9